Europäisches Patentamt

European Patent Office

Office européen des brevets

(11) Veröffentlichungsnummer : **0 040 759**
**B1**

(12) **EUROPÄISCHE PATENTSCHRIFT**

(45) Veröffentlichungstag der Patentschrift :
25.07.84

(51) Int. Cl.³ : **C 08 L 51/00, C 08 J 3/18**

(21) Anmeldenummer : **81103683.9**

(22) Anmeldetag : **13.05.81**

(54) **Verwendung eines Vinylchlorid-Pfropf-Copolymerisates in der Plastisolverarbeitung.**

(30) Priorität : **17.05.80 DE 3018940**

(43) Veröffentlichungstag der Anmeldung :
**02.12.81 Patentblatt 81/48**

(45) Bekanntmachung des Hinweises auf die Patenterteilung : **25.07.84 Patentblatt 84/30**

(84) Benannte Vertragsstaaten :
**AT BE DE FR GB IT NL SE**

(56) Entgegenhaltungen :
**DD-A- 130 260**
**FR-A- 1 373 236**
**US-A- 3 555 122**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Weinlich, Jürgen, Dr.**
**Eichenweg 1**
**D-6239 Eppstein/Taunus (DE)**
Erfinder : **Plewan, Otto**
**Bischof-Sailer-Strasse 15**
**D-8262 Neuötting (DE)**
Erfinder : **Leugering, Hans-Joachim, Dr.**
**verstorben (DE)**

EP 0 040 759 B1

**Beschreibung**

Plastisolmassen werden zur Herstellung von Folienüberzügen und Beschichtungen für die verschiedensten Produkte verwendet. Im allgemeinen sind solche Plastisolmassen definiert als Dispersionen von feinen Partikeln aus thermoplastischen Polymeren in einem flüssigen, nichtflüchtigen Weichmacher, in welchen die Polymeren bei Raumtemperatur unlöslich sind, jedoch bei erhöhter Temperatur im wesentlichen vollständig solvatisiert werden, so daß eine homogene Lösung erhalten wird, welche beim Abkühlen zu einem mehr oder weniger festen Gel erstarrt.

Für die Herstellung von Plastisolen (auch « Pasten » genannt) werden beispielsweise Vinylchlorid-Polymere verwendet, welche speziell für diesen Zweck durch Emulsionspolymerisation in Wasser und anschließendes Sprühtrocknen hergestellt werden. In neuerer Zeit wird zur Herstellung von Vinylchlorid-Polymeren für Plastisole auch das sogenannte Mikrosuspensionsverfahren angewendet. Bei dieser Method wird das Vinylchlorid vor der Polymerisation in Wasser in Gegenwart von Emulgatoren dispergiert und anschließend mit Hilfe von öllöslichen Radikalbildnern polymerisiert. Solche « Pasten-Polyvinylchlorid-Polymerisate » haben im allgemeinen durchschnittliche Teilchendurchmesser zwischen etwa 0,2 bis 4 μm, wobei diese Teilchen zu Sekundäragglomeraten locker zusammengelagert sein können, die wiederum Teilchengrößen zwischen etwa 10 und 30 μm aufweisen. Im allgemeinen wird angestrebt, daß diese Sekundäragglomerate beim Dispergieren in Weichmachern schnell zerfallen, da auf diesem Wege niedrige Pastenviskositäten erhalten werden können.

Es ist ferner bekannt, die Viskositäten von Plastisolen aus den oben beschriebenen Polymerisaten des Vinylchlorids mit verhältnismäßig niedrigem Weichmachergehalt durch Zusatz von Polymerisaten des Vinylchlorids, die eine Teilchengröbe von etwa 30 bis etwa 200 μm aufweisen, zu erniedrigen. Solche Polymerisate werden auch als « Pasten-Extender » oder einfach nur als « Extender » — Polymerisate bezeichnet. Sie werden im allgemeinen durch Suspensionspolymerisation hergestellt.

So ist aus DE-OS 16 45 668 ein Verfahren zur Suspensionspolymerisation von Vinylchlorid in Wasser in Gegenwart von Methylhydroxypropylcellulosen als einzigem Dispergiermittel unter Verwendung monomerlöslicher Katalysatoren bekannt, wobei als Methylhydroxypropylcellulosen solche verwendet werden, die in 2 gew.-%iger Lösung eine Viskosität von 50 bis 500 mPa · s/20 °C aufweisen. Gemeinsam mit dem Vinylchlorid können gegebenenfalls bis zu 10 Gew.-%, bezogen auf das Gewicht des Vinylchlorids, von mit Vinylchlorid mischbaren Vinyl- und/oder Acrylverbindungen, insbesondere Vinylacetat, polymerisiert werden. Es sind so Produkte erhältlich, von denen mindestens 80 Gew.-% aller Teilchen eine Größe unter 100 μm besitzen. Die viskositätserniedrigenden Eigenschaften der so hergestellten Polymerisate sind zwar relativ gut, die darin enthaltenen Anteile mit Teilchengrößen über 100 μm bedingen jedoch Verarbeitungsprobleme, wie Absetzen der Grobanteile. Zudem sind Polymerisate mit groben Anteilen insbesondere für dünne Aufstriche mit glatter Oberfläche, wie sie heute üblich sind, ungeeignet.

In der DE-OS 16 94 312 werden Plastisolmassen beschrieben, die neben einem flüssigen, nichtflüchtigen Weichmacher eine Mischung von Polymeren enthalten, von denen eine Komponente aus einem durch Suspensionspolymerisation hergestellten Vinylchlorid-Homopolymeren oder einem mindestens 80 Gew.-% Vinylchlorid-Einheiten enthaltenden Vinylchlorid-Copolymeren mit einem durchschnittlichen Teilchendurchmesser von 80 bis 180 μm und einer inneren Viskosität von 0,5 bis 1,2 (K-Wert ca. 50 bis 80) besteht und die andere Komponente aus einem Vinylchlorid-Homopolymeren oder einem mindestens 95 Gew.-% Vinylchlorid-Einheiten enthaltenden Vinylchlorid-Copolymeren mit einem durchschnittlichen Teilchendurchmesser unter etwa 0,25 μm und einer inneren Viskosität unter etwa 0,9 (K-Wert ca. 66), wobei von den letztgenannten Polymeren in der polymeren Mischung mindestens 5 und vorzugsweise 10 bis 30 Gew.-% vorhanden sein sollen. Auch diese Plastisolmischung entspricht aufgrund der hohen Teilchengröße nicht den modernen Anforderungen des Auftrags dünner Schichten und neigt nach längerer Lagerzeit zur Bildung von unerwünschtem Bodensatz.

Wie der später beschriebene Vergleichsversuch C ausweist, werden bei einem durch Suspensionspolymerisation hergestellten Vinylchlorid-Homopolymerisat geringe Teilchengrößen erreicht, wenn bei der Polymerisation gewisse Mengen Emulgator zugesetzt werden. Ein solches Polymerisat neigt nicht zum Absetzen und ist auch für den Auftrag dünnerer Schichten geeignet, jedoch zeigt ein solches Material nur eine geringe Viskositätserniedrigung des damit hergestellten Plastisols und ein vergleichsweise niedriges Schüttgewicht.

Es ist ferner aus der DD-PS 130 260 ein Polyvinylchlorid-Extendergemisch für Plastisole bekannt, welches besteht aus 10 bis 60 % Suspensions-PVC mit einer Weichmacheraufnahme von 5 bis 25 % und Teilchengrößen < 150 μm, 20 bis 80 % eines Emulsions-PVC mit Methanolextrakten von 1 bis 3 % und Teilchengrößen von 5 bis 60 μm und 10 bis 50 % eines Mikrosuspensions-PVC mit Teilchengrößen von 0,2 bis 3 μm. Genauere Angaben über die Herstellung der verschiedenen Polymerisate sind der Schrift nicht zu entnehmen. Auch diese Schrift zeigt, wie schwierig es ist, bei Extenderpolymerisation größere Viskositätserniedrigung, kein Absetzen und niedrige Teilchengröße ohne Grobanteile zu verwirklichen. Selbst über die aufwendige Mischung dreier verschiedener Polymerisate läßt sich das Absetzproblem nicht völlig beseitigen, wie die erfindungsgemäßen Beispiele 1 und 2 verdeutlichen.

Es wurde nun überraschenderweise gefunden, daß die Verwendung ganz bestimmter Vinylchlorid-Pfropf-Copolymerisate als Extender-Polymerisate in Mischungen für die Plastisol-Verarbeitung Plastisole ergibt, die die oben beschrieben Nachteile nicht aufweisen.

Es handelt sich um die Verwendung eines Vinylchlorid-Pfropf-Copolymerisates, das in Gegenwart von mindestens einem öllöslichen, radikalisch zerfallenden Aktivator, einem Suspensionsstabilisator und einem Emulgator sowie gegebenenfalls weiterer Polymerisationshilfsstoffen hergestellt worden ist, als Mischungskomponente neben Vinylchlorid-Homopolymerisaten oder -Copolymerisaten, Weichmachern, Thermostabilisatoren und gegebenenfalls weiteren Zusätzen in Mischungen für die Plastisolverarbeitung, dadurch gekennzeichnet, daß als Vinylchlorid-Pfropf-Copolymerisat 5 bis 70 Gew.-%, bezogen auf die Gesamtmenge der in Mischung eingesetzten Polymeren, eines Vinylchlorid-Propf-Copolymerisates eingesetzt werden, das einen K-Wert von 50 bis 80 sowie eine mittlere Teilchengröße von 20 bis 60 μm aufweist und enthält : 99,5 bis 88 Gew.-%, bezogen auf das Pfropf-Copolymerisat, polymerisierte Einheiten von Vinylchlorid, 0,1 bis 11,9 Gew.-%, bezogen auf das Pfropf-Copolymerisat, polymerisierte Einheiten von Vinylacetat, und 0,1 bis 2,2 Gew.-%, bezogen auf das Pfropf-Copolymerisat, polymerisierte Einheiten des Ethylens mit der Maßgabe, daß die Summe aus polymerisierten Einheiten des Ethylens und des Vinylacetats 0,5 bis 12 Gew.-%, bezogen auf das Pfropf-Copolymerisat, beträgt, wobei dieses Pfropf-Copolymerisat hergestellt worden ist durch Polymerisation von Vinylchlorid oder einer Mischung von Vinylchlorid und Vinylacetat in Gegenwart von 0,45 bis 2,5 Gew.-%, bezogen auf eingesetztes Monomeres oder Monomerengemisch, eines Mischpolymerisates, das 20 bis 80 Gew.-%, bezogen auf das Mischpolymerisat, polymerisierte Einheiten des Vinylacetats und 80 bis 20 Gew.-%, bezogen auf das Mischpolymerisat, polymerisierte Einheiten des Ethylens enthält, und ein mittleres Molekulargewicht, osmotisch gemessen von 5 000 bis 200 000 aufweist.

Werden weniger als 5 Gew.-%, bezogen auf die Gesamtmenge der in Mischung eingesetzten Polymeren, der Vinylchlorid-Pfropf-Copolymerisate verwendet, so wird im allgemeinen nur eine ungenügende Viskositätserniedrigung erzielt. Bei Anwendung von über 70 Gew.-%, bezogen auf die Gesamtmenge der in Mischung eingesetzten Polymeren, nehmen die Verarbeitungseigenschaften des Plastisols ab, zu große Zugabemengen an Vinylchlorid-Pfropf-Copolymerisat erhöhen wiederum die Viskosität des Plastisols. Vorzugsweise werden 10 bis 60 Gew.-%, bezogen auf die Gesamtmenge des eingesetzten Polymeren, des beschriebenen Vinylchlorid-Propf-Copolymerisates eingesetzt.

Das Vinylchlorid-Pfropf-Copolymerisat hat zweckmäßig einen K-Wert von 50 bis 80. Außerhalb dieses Bereiches nehmen die mechanischen Eigenschaften der aus den Plastisolen erzeugten Produkte ab, beziehungsweise treten Gelierschwierigkeiten auf. Vorzugsweise wird ein Vinylchlorid-Pfropf-Copolymerisat eingesetzt, das einen K-Wert von 55 bis 77 aufweist.

Das erfindungsgemäß einzusetzende Vinylchlorid-Pfropf-Copolymerisat soll eine zahlenmittlere Teilchengröbe von 20 bis 60 μm aufweisen. Unterhalb 20 μm läßt die viskositätserniedrigende Wirkung nach, die Rieselfähigkeit wird schlechter und die Staubbildung störend, oberhalb 60 μm wird das Plastisol immer weniger zur Herstellung dünner Aufstriche geeignet, es treten beim Streichen Schwierigkeiten wegen Oberflächenungleichmäßigkeiten und schwankender Verarbeitungsviskositäten auf, da Plastisole aus Polymermischungen, die ein Polymeres mit höherer mittlerer Teilchengröße enthalten, zum Absetzen neigen. Vorzugsweise wird ein Vinylchlorid-Propf-Copolymerisat eingesetzt, das eine mittlere Teilchengrößen von 30 bis 55 μm aufweist.

Die Weichmacheraufnahme, wie nachfolgend beschrieben gemessen, sollte bei dem Vinylchlorid-Pfropf-Copolymerisat im allgemeinen möglichst niedrig liegen, da höhere Weichmacheraufnahmen die viskositätserniedrigende Wirkung und die Viskositätsbeständigkeit der Plastisole bei Lagerung in zunehmendem Maße herabsetzen. Vorzugsweise haben die Vinylchlorid-Pfropf-Copolymerisate eine Weichmacheraufnahme von 5 bis 12 und insbesondere von 5 bis 9 %.

Das erfindungsgemäß einzusetzende Pfropf-Copolymerisat enthält 99,5 bis 88 Gew.-%, bezogen auf das Pfropf-Copolymerisat, polymerisierte Einheiten von Vinylchlorid, der Rest von 0,5 bis 12 Gew.-%, bezogen auf das Pfropf-Copolymerisat, besteht aus polymerisierten Einheiten des Ethylens und des Vinylacetats. Im vorhergehenden und nachfolgenden Text ist der Passus « bezogen auf das Pfropf-Copolymerisat » so zu verstehen, daß die entsprechenden Prozent-Zahlen auf ein reines Pfropf-Copolymerisat bezogen sind, das keine Reste von Aktivatoren, Suspendierhilfsmitteln, Emulgatoren und sonstigen Polymerisationshilfsstoffen mehr enthält. Das heißt, der zwangsläufige Gehalt an diesen Stoffen ist bei Berechnung des Prozent-Verhältnisses vorher abzuziehen. Unter 0,5 Gew.-% polymerisierte Einheiten des Ethylens und Vinylacetats ergeben die Pfropf-Copolymerisate im angegebenen Teilchengrößenbereich keine ausreichende Viskositätserniedrigung, oberhalb 12 Gew.-% der Summe von polymerisierten Einheiten des Ethylens und Vinylacetats treten Schwierigkeiten bezüglich der Viskositäts-Konstanz bei Lagerung der Plastisole auf und werden die Plastisolmischungen im allgemeinen zu leicht gelierfähig.

Die erfindungsgemäß zu verwendenden Vinylchlorid-Pfropf-Copolymerisate werden durch Polymerisation von Vinylchlorid oder einem Monomerengemisch von Vinylchlorid und Vinylacetat in wäßriger Suspension in Gegenwart von 0,45 bis 2,5 Gew.-%, bezogen auf eingesetztes Monomeres oder eingesetztes Monomerengemisch, eines Mischpolymerisates hergestellt, das seinerseits 20 bis 80 Gew.-%, bezogen auf das Mischpolymerisat, polymerisierte Einheiten des Vinylacetats und 80 bis 20 Gew.-%, bezogen auf das Mischpolymerisat, polymerisierte Einheiten des Ethylens enthält und ein Molekulargewicht osmotisch gemessen, von 5 000 bis 200 000, vorzugsweise von 10 000 bis 100 000, aufweist, Die Einsatzmenge des Ethylenvinylacetat-Mischpolymerisates ist auf einen 90 %igen Umsatz bei der Polymerisation berechnet. Es können mit gutem Erfolg auch höhere und niedrigere Umsätze bei der Polymerisation angewendet werden, dies ist bei der Menge des eingesetzten Mischpolymerisates entsprechend zu berücksichtigen, da dieses vollständig im erzeugten Pfropf-Copolymerisat verbleibt, während das eingesetzte Monomere beziehungsweise die eingesetzten Monomeren je nach ihrem Umsetzungsgrad in das erzeugte Pfropf-Copolymerisat eingehen. Sehr niedrige Umsetzungsgrade, beispielsweise unter 80 %, sind aus wirtschaftlichen Gründen weniger interessant. Wird in Gegenwart von 2,5 Gew.-%, bezogen auf eingesetztes Monomeres, eines Mischpolymerisates aus Ethylen und Vinylacetat gearbeitet, so entsteht bei 90 % Umsatz ein Pfropf-Copolymerisat, das ca. 2,8 Gew.-%, bezogen auf das Pfropf-Copolymerisat, des ursprünglich eingesetzten Mischpolymerisates enthält. Oberhalb dieses Gehaltes an ursprünglich eingesetztem Ethylenvinylacetat-Mischpolymerisat werden im allgemeinen im Sinne der Erfindung brauchbare Pfropf-Copolymerisate erchalten, doch wird es mit zunehmendem Ethylenvinylacetat-Polymerisatgehalt schwieriger, den gewünschten Korngrößenbereich und die gewünschte enge Korngrößenverteilung einzustellen, der Streichtest zeigt ungünstigere Ergebnisse und die Produkte sind für dünnere Beschichtungen nicht mehr uneingeschränkt verwendbar, so daß der zusätzliche Aufwand, der mit einem vermehrten Einsatz des Ethylenvinylacetat-Mischpolymerisats verbunden ist, im Hinblick auf die damit erreichte Wirkung weniger lohnend ist.

Besonders gute Ergebnisse werden erhalten, wenn für die Herstellung des Pfropf-Copolymerisates ein Ethylenvinylacetat-Mischpolymerisat eingesetzt wird, das 40 bis 65 Gew.-% polymerisierte Einheiten des Vinylacetats und 60 bis 35 Gew.-% polymerisierte Einheiten des Ethylens enthält.

Die Herstellung des Vinylchlorid-Pfropf-Copolymerisates erfolgt in wäbriger Suspension, wobei etwa je 100 Teile eingesetzter Monomer 150 bis 300 Teile Wasser verwendet werden und die Polymerisationstemperatur auf 35 bis 80, vorzugsweise auf 45 bis 75°C, eingestellt wird.

Als Monomere werden entweder reines Vinylchlorid oder eine Mischung von Vinylchlorid mit Vinylacetat eingesetzt. Zweckmäßig wird das Ethylenvinylacetat-Mischpolymerisat vor Beginn der Polymerisation im Monomeren beziehungsweise Monomerengemisch gelöst. Der Anteil des Monomerengemisches an Vinylacetat ist so hoch zu halten, daß unter Berücksichtigung des Vinylacetatanteiles, der über das Ethylenvinylacetat-Mischpolymere eingeführt wird, im Endprodukt der Pfropfpolymerisation 0,1 bis 11,9 Gew.-%, bezogen auf das Pfropf-Copolymerisat, polymerisierte Einheiten von Vinylacetat vorhanden sind. Vorzugsweise wird soviel monomeres Vinylacetat in Mischung mit Vinylchlorid verwendet, daß im fertigen Pfropf-Copolymerisat 0,1 bis 7,9 Gew.-%, bezogen auf das Pfropf-Copolymerisat, polymerisierte Einheiten von Vinylacetat zugegen sind.

Die Polymerisation wird in Gegenwart von 0,003 bis 1 Gew.-%, vorzugsweise von 0,01 bis 0,3 Gew.-%, bezogen auf Monomere, eines oder mehrerer öllöslicher radikalbildender Aktivatoren durchgeführt. Geeignete Aktivatoren sind zum Beispiel Diaryl- oder Diacyl-peroxide, wie Diacetyl-, Acetylbenzoyl-, Dilauroyl-, Dibenzoyl-, Bis-2,4-dichlorbenzoyl-, Bis-2-methyl-benzoyl-peroxid ; Dialkylperoxide, wie Di-tert.- butylperoxid, Perester, wie tert.-Butylpercarbonat, tert.-Butylperacetat, tert.-Butyloctoat, tert.-Butylperneodecanoat, tert.-Butylperpivalat, Dialkylperoxy-di-carbonate, wie Diisopropyl-, Diethylhexyl-, Dicyclohexyl-, Diethylcyclohexylperoxy-dicarbonat, gemischte Anhydride von organischen Sulfopersäuren und organischen Säuren, wie Acetylcyclohexylsulfonylperoxid ; als Polymerisationskatalysatoren bekannte Azoverbindungen, wie Azoisobuttersäurenitril.

Ferner wird in Gegenwart von 0,02 bis 2 Gew.-%, vorzugsweise 0,1 bis 1 Gew.-%, von einem oder mehreren Suspensionsstabilisatoren polymerisiert. Als solche sind beispielsweise geeignet Gelatine, Mischpolymerisate von Maleinsäure beziehungsweise deren Halbestern mit Styrolen, Polyvinylpyrrolidon und Copolymerisate aus Vinylacetat und Vinylpyrrolidon, wasserlösliche Cellulosederivate, wie Carboxymethylcellulose, Hydroxyethylcellulose, Aminopropylcellulose, Polyvinylalkohol, der gegebenenfalls noch bis zu 40 Mol-% Acetylgruppen enthält. Bevorzugt werden wasserlösliche Celluloseether, wie Methylcellulose oder Methylhydroxypropylcellulose sowie teilacetylierte Polyvinylalkohole eingesetzt, deren 2 gew.-%ige wäßrige Lösung bei 20 °C eine Viskosität von 20 bis etwa 1 000 mPa · s (für Celluloseether) beziehungsweise 2 bis etwa 200 mPa · s (für teilacetylierte Polyvinylalkohole) aufweist.

Es wird ferner in Gegenwart von einem oder mehreren Emulgatoren polymerisiert, wie sie bei der Emulsionspolymerisation von Vinylchlorid eingesetzt werden. Es können amphotere, kationische sowie nichtionogene und bevorzugt anionische Emulgatoren verwendet werden. Als anionische Emulgatoren sind beispielsweise geeignet Alkali-, Erdalkali- oder Ammoniumsalze von Fettsäuren, wie Laurin-, Palmitin- oder Stearinsäure ; von sauren Fettalkohol-Schwefelsäureestern, von Alkansulfonsäuren, insbesondere solchen mit einer Kettenlänge von 10 bis 18 C-Atomen, von Alkylarylsulfonsäuren, wie Dodecylbenzol- oder Dibutylnaphthalinsulfonsäure ; von Sulfobernsteinsäuredialkylestern, sowie die Alkali- und Ammoniumsalze von epoxygruppenhaltigen Fettsäuren, wie Epoxystearinsäure, von Umsetzungsprodukten von Persäuren, zum Beispiel Peressigsäure mit ungesättigten Fettsäuren, wie Öl- oder Linolsäure, oder ungesättigten. Oxyfettsäuren, wie Rizinolsäure. Als amphotere beziehungsweise kationenaktive Emulgatoren sind beispielsweise geeignet : Alkylbetaine, Dodecylbetain ; sowie Alkylpyridiniumsalze, wie Laurylpyridiniumhydrochlorid, ferner Alkylammoniumsalze, wie Oxethyldodecylammoniumchlorid. Als nichtionogene Emulgatoren sind beispielsweise geeignet : Teilfettsäureester mehrwertiger Alkohole, wie Glycerinmonostearat, Sorbitmonolaurat, -oleat oder -palmitat ; Polyoxyethylenester von Fettalkoholen oder aromatischen Hydroxyverbindungen ; Polyoxyalkylenester von Fettsäuren sowie Polypropylenoxid-Polyethylenoxid-Kondensationsprodukte.

Als gegebenenfalls zuzugebende Polymerisationshilfsstoffe kommen in Frage Puffersubstanzen, wie beispielsweise Alkaliacetate, Borax, Alkaliphosphate, Alkalicarbonate, Ammoniak oder Ammoniumsalze von Carbonsäuren sowie Molekülgrößenregler, wie beispielsweise aliphatische Aldehyde mit 2 bis 4 Kohlenstoffatomen, Chlor- oder Bromkohlenwasserstoffe, wie zum Beispiel Di- und Trichlorethylen, Chloroform, Bromoform, Methylenchlorid sowie Mercaptane, ferner Antioxidantien und weitere Polymerisationshilfsstoffe.

Die Polymerisation kann kontinuierlich und vorzugsweise diskontinuierlich durchgeführt werden, wobei gegebenenfalls unter Rückflußkühlung, Verwendung von zwei oder mehreren Rührgeschwindigkeiten und/oder Temperaturstufen gearbeitet werden kann. Der pH-Wert der Polymerisationsflotte sollte zwischen 2 und etwa 10 liegen.

Während der Polymerisation können ein oder mehrere folgender Stoffe, gegebenenfalls unter Konstanthaltung des Füllvolumens des Polymerisationsgefäßes, zugegeben werden : Wasser, wäßrige Lösungen, Monomere, Aktivatoren, Suspensionsstabilisatoren, Emulgatoren, weitere Polymerisationshilfsstoffe, wie zum Beispiel Puffersubstanzen oder Regler.

Die so hergestellten Polymerisate können nach bekannten Verfahren sowohl in wäßriger Dispersion, als wasserfeuchter Kuchen oder im pulverförmigen feuchten oder trockenen Zustand von restlichen Monomeren, insbesondere Vinylchlorid, befreit werden.

Die Aufarbeitung der wäßrigen Polymerisatdispersion zum trockenen Pulver erfolgt ebenfalls nach bekannten Methoden, beispielsweise durch Dekantieren der Hauptmenge der wäßrigen Phase in einer Dekanter-Zentrifuge und Trocknen des so erhaltenen wasserfeuchten Kuchens in einem Strom- oder Wirbelbett-Trockner.

Die wie beschrieben hergestellten Polymerisate werden erfindungsgemäß in Mischungen für die Plastisol-Verarbeitung verwendet, wobei 5 bis 70 Gew.-%, vorzugsweise 10 bis 60 Gew.-%, bezogen auf die Gesamtmenge der in der Mischung vorhandenen Polymeren eingesetzt werden. Die restlichen 95 bis 30, vorzugsweise 90 bis 40 Gew.-%, der in der Mischung vorhandenen Polymeren bestehen zweckmäßig aus einem oder mehreren in an sich bekannter Weise für die Plastisolherstellung erzeugten Polymeren. Solche Polymeren haben in der Regel mittlere Teilchengrößen der Primärteilchen von etwa 0,2 bis 4 μm. Diese Primärteilchen entstehen bei der Polymerisation und können meistens durch die nachfolgende Aufarbeitung des Polymerisationsansatzes zum trockenen Polymeren zu Sekundärpartikeln höherer mittlerer Teilchengröße, beispielsweise 5 bis 30 μm, agglomeriert sein. Diese Agglomerate zerfallen jedoch bei der Mischung mit Weichmachern in der Regel schnell wiederum in die Primärpartikel.

Solche bekannten für die Plastisolbereitung erzeugten Polymerisate können beispielsweise durch bekannte Emulsionspolymerisation in wäßriger Flotte in Gegenwart von Emulgatoren und wasserlöslichen, radikalisch zerfallenden, meist peroxidischen Aktivatoren oder durch das bekannte Mikrosuspensions-Polymerisationsverfahren hergestellt worden sein. Diese Verfahren ist beispielsweise beschrieben in der DE-PS 962 834, 1 069 387, DE-OS 26 36 931 sowie in der GB-PS 698 359 und der US-PS 2 674 585.

Sowohl bei den nach dem Emulsionsverfahren wie auch bei den nach dem Mikrosuspensionsverfahren hergestellten Polymerisaten kann anstelle von reinem Vinylchlorid auch eine Mischung von Vinylchlorid mit damit copolymerisierbaren Monomeren verwendet werden, wobei jedoch diese Mischung mindestens 90 Gew.-% Vinylchlorid enthalten sollte. Im allgemeinen wird der Gehalt an Comonomeren in solchen Polymerisaten 5 bis 7 Gew.-%, bezogen auf das Polymerisat, nicht überschreiten.

Es ist in der Regel ausreichend, entweder ein nach dem Emulsionsverfahren oder ein nach dem Mikrosuspensionsverfahren hergestelltes Polymerisat mit dem erfindungsgemäß zu verwendenden Polymerisat zu mischen. Selbstverständlich sind auch Mischungen von mehr als zwei Polymerisaten möglich.

Aus den beschriebenen Polymerisatgemischen können in bekannter Weise durch Verreiben mit Weichmacher, gegebenenfalls unter Mitverwendung von nicht oder wenig lösenden beziehungsweise quellenden organischen, flüchtigen und/oder nichtflüchtigen Verdünnungsmitteln, Plastisole (sofern Verdünnungsmittel vorhanden sind, werden sir auch als Organosole bezeichnet) hergestellt werden. Dabei können in solchen Plastisolen übliche Zusätze, wie Stabilisatoren, Farbstoffe, Pigmente und Füllstoffe mitwendet werden.

Als Weichmacher sind geeignet alle monomeren und polymeren Verbindungen, die üblicherweise als Weichmacher für Polyvinylchlorid und dessen Mischpolymerisate verwendet werden. Solche sind beispielsweise beschrieben von H. Gnamm und W. Sommer in « Die Lösungsmittel und Weichmachungsmittel », Stuttgart, 1958, Seiten 589 bis 735. Bevorzugt werden verwendet vollständig veresterte Di- und Tricarbonsäuren sowie vollständig veresterte mehwertige anorganische Säuren, wie Di-n-butylphthalat, Di-2-ethylhexylphthalat, Di-ethylsebacat, Triethylcitrat oder Trikresylphosphat.

In Plastisolen werden die Weichmacher in Mengen von 15 bis 200 Gew.-%, vorzugsweise von 15 bis 100 Gew.-%, bezogen auf die die Polymerisate, angewandt.

Zur Herstellung von auch als Organosole bezeichneten Plastisolen werden, wie bekannt, neben 10 bis 50 Gew.-% an Weichmachern noch 10 bis 50 Gew.-%, jeweils bezogen auf die Polymerisate, nichtflüchtige, nicht oder nur wenig lösende beziehungsweise quellende organische Verdünnungsmittel mitverwendet. Zusätzlich können noch Flüchtige Verdünnungsmittel angewandt werden und zwar in beliebigen Mengen, da sie in den aus den Organosolen hergestellten Fertigartikeln wegen ihrer Flüchtigkeit nicht meht vorhanden sind. Ein derartiges als Organosol zu bezeichnendes Plastisol kann zum Beispiel in bekannter Weise hochsiedende Ester als Weichmacher, Erdölextrakte mit einem Siedepunkt oberhalb 125 °C bei einem Druck von 133 Pa als nichtflüchtige und im Bereich von 35 bis 250 °C unter normalen Atmosphärendruck siedende Kohlenwasserstoffe als flüchtige Verdünnungsmittel enthalten.

Die mit dem oben beschriebenen Polymergemisch hergestellten Plastisole beziehungsweise Organosole können üblicherweise durch Aufstreichen, Besprühen, Tauchen oder Bürsten auf Trägerbahnen aufgetragen sowie zur Herstellung von gegossenen Formkörpern und von Schaumstoffen verwendet werden.

Mit den erfindungsgemäß zu verwendenden Pfropf-Copolymerisaten werden Plastisole von niedriger Viskosität und guter Lagerbeständigkeit sowohl in bezug auf Viskositätskonstanz wie auch auf Absetzen von Mischungsbestandteilen erhalten, die auch in dünner Beschichtung gleichmäßige Aufstriche ergeben. Durch das vergleichsweise hohe Schüttgewicht ist eine rationelle Lagerung und Verarbeitung der Pfropf-Copolymerisate gewährleistet, sie sind außerdem gut von anhaftenden flüchtigen Bestandteilen, beispielsweise Monomeren, zu befreien, wodurch eine physiologisch einwandfreie Weiterverarbeitung und Gebrauch der erzeugten Artikel ermöglicht wird.

Nachfolgende Beispiele und Vergleichsversuche sollen die Erfindung näher erläutern. Der Übersichtlichkeit halber wurden die Meßergebnisse in einer Tabelle zusammengefaßt, wobei die erfindungsgemäßen Beispiele mit Ziffern und die Vergleichsversuche mit Großbuchstaben gekennzeichnet sind.

Die aufgeführten Eigenschaften wurden nach folgenden Meßmethoden ermittelt :

K-Wert : Nach DIN 53 726

Mittlerer Korndurchmesser : Durch Auswertung einer nach DIN-Norm 53 195 erstellen Körnungsanalyse mit dem bekannten Körnungsnetz nach Rosin-Ramler und Sperling.

Anteil von Polymerteilchen > 100 μm : Nach DIN 53 580 wird der Siebrückstand mit Wasser als Spülflüssigkeit mit dem Mocker-Gerät unter Verwendung eines Siebs mit 100 μm Maschenweite bestimmt. Er ist in Gewichtsprozent, bezogen auf die Menge des eingesetzten Polymerisates, angegeben.

Plastisol-Viskosität : Die Herstellung der zu bestimmenden Plastisole wird nach DIN 54 800 vorgenommen. Hierbei wird ein durch Emulsionspolymerisation hergestelltes, für die Plastisolverarbeitung geeignetes Vinyl-chlorid-Copolymerisat verwendet, das 5 Gew.-%, bezogen auf das Polymerisat, polymerisierte Einheiten des Vinylacetats enthält und folgende Eigenschaften aufweist : K-Wert 69, Schüttgewicht 360 g/1, Emulgatorgehalt 2 Gew.-%, mittlere Teilchengröße 15 μm, Anfangsviskosität 7 Pa · s (gemessen nach 1 h, bei 20 °C und 40 s$^{-1}$ an einer Polymer-Di-2-ethylhexylphthalat-Mischung im Verhältnis 60/40).

30 Gew.-Teile des oben näher beschriebenen Polymerisates werden mit 30 Gew.-Teilen des zu bewertenden Extender-Polymerisates und 40 Gew.-Teilen Di-2-ethylhexylphthalat vermischt und an der Mischung nach DIN 54 801 jeweils nach 1 Stunde, 4 Tagen und 8 Tagen nach Herstellung der Mischung die Viskosität bestimmt. In nachfolgender Tabelle ist jeweils angegeben, um wieviel Prozent die Viskosität des gemessenen Polymergemisches niedriger liegt als die eines Gemisches, bei dem 60 Gew.-Teile des oben näher beschriebenen Emulsions-Polymeren zusammen mit 40 Gew.-Teilen Di-2-ethyl-hexylphthalat eingesetzt wurden.

Streichtest : Von dem für die Viskositätsmessung angesetzten Plastisol wird eine Stunde nach Ansetzen der Mischung der Streichtest durchgeführt. Hierzu wird das Grindometer der Firma Erichsen, Typ 232, benützt. Es besteht aus einem Metallblock mit geschliffener Oberfläche, in die eine keilförmige Nut eingefräst ist, die auf der einem Seite des Metallblocks eines Tiefe von 100 μm aufweist und auf der anderen Seite des Metallblocks mit der Oberfläche verläuft. Die jeweilige Tiefe der Nut kann an einer Skala seitlich des Metallblocks abgelesen werden. An der tiefsten Stelle der Nut werden zwei Tropfen des zu prüfenden Plastisols aufgebracht und mit einem Metallrakel mit polierter Kante das Plastisol in Richtung abnehmender Nuttiefe ausgestrichen. An einer bestimmten Stelle in Streichrichtung beginnend treten Unregelmäßigkeiten in der bisher glatten Oberfläche des Plastisols in Gestalt von Längsstreifen auf, die rasch zunehmen. An der Stelle der Nut, an der mindestens fünf solcher Streifen beobachtet werden, wird die Nuttiefe und damit die Dicke des aufgestrichenen Plastisols abgelesen. Sie ist in nachfolgender Tabelle in Mikrometern angegeben und stellt ein Maß dar, wie dünn ein solches Plastisol ohne Schwierigkeiten aufgetragen werden kann.

Weichmacheraufnahme : Auf den perforierten Innenboden eines Zentrifugierbecher-Einsatzes (Laborzentrifuge nach DIN 58 970E) wird ein mit Di-2-ethylhexylphthalat (DOP) getränktes Filtrierpapier dicht angelegt und der Einsatz mit Filtrierpapier gewogen (Gewicht $m_1$). Dann werden in diesen Einsatz 10,0 g Polymerisat-Probe eingewogen (Gewicht $m_2$), danach ca. 20 g DOP zugegeben und etwa 5 min stehengelassen. Sodann wird bei einer Zentrifugenbeschleunigung am Boden des perforierten Einsatzes von 25 000 bis 26 000 m²/s 60 min lang abzentrifugiert. Der Einsatz wird äußerlich durch Abwischen mit Filtrierpapier gereinigt und samt Inhalt gewogen (Gewicht $m_3$). Die Weichmacheraufnahme, die unter anderem ein Maß für die Porosität des Polymerkorns ist, errechnet sich (in Gew.-%) nach der Formel

$$\frac{m_3 - m_2}{m_2 - m_1} \cdot 100.$$

6

Die angegebenen Werte sint Mittelwerte aus zehn Einzelmessungen.
Schüttgewicht : Nach DIN 53 568.

Beispiele 1 bis 6 und Vergleichsversuche A bis D

Die erfindungsgemäß zu verwendenden und zum Vergleich dienenden Extender-Polymerisate werden wie folgt hergestellt : Ein Gemisch aus Vinylchlorid, Ethylen-vinylacetat-Copolymerisat mit einem osmotisch gemessenen mittleren Molekulargewicht von 10 000 bis 30 000, entsalztem Wasser, Suspendiermittel, Emulgator und Aktivator, wie sie in nachfolgender Tabelle nach Art und Menge ausgewiesen sind (bei Beispiel 6 wird, wie aus der Tabelle ersichtlich, zusätzlich Vinylacetat eingesetzt, bei den Vergleichsversuchen C und D wird ohne Ethylenvinylacetat-Copolymerisat und ohne Vinylacetat gearbeitet), wird in einem 400 l-Rührautoklaven aus V₄A-Edelstahl vier Stunden bei 20 °C gerührt, um das Ethylenvinylacetat-Copolymerisat vollständig im monomeren Vinylchlorid zu lösen. Anschließend wird das Gemisch unter weiterem Rühren auf die ebenfalls in der Tabelle engegebene Temperatur erwärmt und bei dieser Temperatur bis zu einem Druckabfall auf 0,4 MPa polymerisiert. Nun wird entspannt, die anfallende feinkörnige Polymerisat-Suspension nach bekanntem Verfahren von restlichem monomerem Vinylchlorid befreit und mittels einer Dekanter-Zentrifuge das Polymerisat von der Hauptmenge der wäßrigen Polymerisationsflotte getrennt. Das so erhaltene Produkt wird mit Heißluft (Eingang 150 °C, Ausgang 85 °C) getrocknet.

An den so erhaltenen Extender-Polymerisaten werden die in der Tabelle angegebenen Eigenschaften ermittelt. In nachfolgender Tabelle bedeuten :

GT = Gewichtsteile

Gew.-% VAc = Gewichtsprozent polymerisiertes Vinylacetat, bezogen auf das Ethylenvinylacetat-Copolymerisat (der Rest sind polymerisierte Ethyleneinheiten) ;

MC 50 = Methylcellulose, dern 2 gew.-%ige wäßrige Lösung bei 20 °C eine Viskosität von 50 mPa · s aufweist ;

MHPC 50 = Methylhydroxypropylcellulose, deren 2 gew.-%ige wäßrige Lösung bei 20 °C eine Viskosität von 50 mPa · s aufweist ;

MHPC 100 = Methylhydroxypropylcellulose, deren 2 gew.-%ige wäßrige Lösung bei 20 °C eine Viskosität von 100 mPa · s aufweist ;

PVA = Polyvinylalkohol mit 20 Gew.-% Acetatgruppen, dessen 4 gew.-%ige wäßrige Lösung bei 20 °C eine Viskosität von mPa · s aufweist ;

E I = Natrium-n-dodecylbenzolsulfonat ;

E II = Natrium-n-alkansulfonat mit verschiedenen Kettenlängen von C₁₂ bis C₁₆ mit einen überwiegenden Gehalt an C₁₄ ;

E III = Natrium-dibutylnaphthalinsulfonat ;

IPP = Di-isopropylperoxydicarbonat ;

LPO = Di-lauroylperoxid ;

TBPND = tert.-Butylperneodecanoat.

Bei den mit *) gekennzeichneten Zahlen für die prozentuale Viskositätserniedrigung hatte sich bei den in der Tabelle angegebenen Lagerzeiten ein Bodensatz aus Polymerkörnern im Plastisol gebildet.

(Siehe Tabellen, Seite 8 ff.)

7

Tabelle

| Beispiel/ Vergleichsversuch | 1 | 2 | 3 | 4 | 5 | 6 | A | B | C | D |
|---|---|---|---|---|---|---|---|---|---|---|
| Ethylen-Vinylacetat Mischpolymerisat | 2 GT 45% VAc | 1 GT 45% VAc | 0,5 GT 45% VAc | 1 GT 40% VAc | 1 GT 45% VAc | 1 GT 45% VAc | 0,2 GT 45% VAc | 10 GT 45% VAc | - | - |
| Vinylchlorid GT | 100 | 100 | 100. | 100 | 100 | 95 | 100 | 100 | 100 | 100 |
| Vinylacetat GT | - | - | - | - | - | 5 | - | - | - | - |
| Wasser GT | 200 | 200 | 200 | 200 | 200 | 200 | 200 | 200 | 200 | 200 |
| Suspensions- stabilisator | 0,25 GT MC 50 | 0,2 GT MC 50 | 0,2 GT MHPC 50 | 0,25 GT MHPC 50 | 0,25 GT MHPC 50 | 0,5 GT PVA | 0,25 GT MC 50 | 1 GT MC 50 | 0,3 GT MC 50 | 0,2 GT MHPC 100 |
| Emulgator | 0,02 GT E I | 0,02 GT E III | 0,02 GT E III | 0,02 GT E I | 0,02 GT E II | 0,05 GT E I | 0,02 GT E III | 0,1 GT E III | 0,05 GT E I | - |
| Aktivator | 0,02 GT IPP | 0,02 GT IPP | 0,02 GT IPP | 0,05 GT LPO 0,02 GT TBPND | 0,04 GT IPP | 0,02 GT IPP | 0,02 GT IPP | 0,02 GT IPP | 0,02 GT IPP | 0,02 GT IPP |
| Reaktionstemp. °C | 60 | 60 | 60 | 67 | 53 | 60 | 60 | 60 | 60 | 60 |
| K-Wert | 65,2 | 64,8 | 65,4 | 59,8 | 70,5 | 65,3 | 65,5 | 64,9 | 64,8 | 65,1 |
| mittl. Korndurch- messer μm | 24 | 28 | 32 | 27 | 30 | 34 | 32 | 49 | 30 | 80 |

0 040 759

Tabelle (Fortsetzung)

| Beispiel / Vergleichsversuch | | 1 | 2 | 3 | 4 | 5 | 6 | A | B | C | D |
|---|---|---|---|---|---|---|---|---|---|---|---|
| Korn-Anteil > 100 µm | | 0,06 % | 0,08 % | 0,15 % | 0,08 % | 0,12 % | 0,11 % | 0,10 % | 1,2 % | 0,12 % | 3,8 % |
| Streichtest µm | | 45 | 50 | 60 | 50 | 55 | 60 | 60 | >100 | 60 | >100 |
| Viskositäts-erniedrigung um % | 1 h | 57 | 57 | 48 | 57 | 36 | 43 | 6 | 60 | 2 | 46 |
| nach Lager-zeit des | 4 Tage | 56 | 56 | 50 | 58 | 45 | 49 | 17 | 66*) | 13 | 58 *) |
| Plastisols | 8 Tage | 57 | 54 | 51 | 58 | 48 | 51 | 20 | 68*) | 15 | 60 *) |
| Weichmacheraufnahme Gew.-% | | 6,5 | 6,4 | 8,8 | 5,5 | 7,7 | 6,9 | 13,2 | 5,7 | 14,2 | 8,5 |
| Schüttgewicht g/l | | 690 | 697 | 629 | 710 | 604 | 636 | 520 | 650 | 480 | 625 |

0 040 759

**Ansprüche**

1. Verwendung eines Vinylchlorid-Pfropf-Copolymerisates, das in Gegenwart von mindestens einem öllöslichen, radikalisch zerfallenden Aktivator, einem Suspensions-Stabilisator und einem Emulgator sowie gegebenenfalls weiteren Polymerisationshilfsstoffen hergestellt worden ist, als Mischungskomponente neben Vinylchlorid-Homopolymerisaten oder -Copolymerisaten, Weichmachern, gegebenenfalls Thermostabilisatoren und weiteren Zusätzen in Mischung für die Plastisol-Verarbeitung, dadurch gekennzeichnet, daß als Vinylchlorid-Propf-Copolymerisat 5 bis 70 Gew.-%, bezogen auf die Gesamtmenge der in Mischung eingesetzten Polymeren, eines Vinylchlorid-Pfropf-Copolymerisates eingesetzt werden, das einen K-Wert von 50 bis 80 sowie eine mittlere Teilchengröße von bis 60 µm aufweist und enthält : 99,5 bis 88 Gew.-%, bezogen auf das Pfropf-Copolymerisat, polymerisierte Einheiten von Vinylchlorid, 0,1 bis 11,9 Gew.-%, bezogen auf das Pfropf-Copolymerisat, polymerisierte Einheiten von Vinylacetat, und 0,1 bis 2,2 Gew.-%, bezogen auf das Pfropf-Copolymerisat, polymerisierte Einheiten des Ethylens mit der Maßgabe, daß die Summe aus polymerisierten Einheiten des Ethylens und Vinylacetats 0,5 bis 12 Gew.-%, bezogen auf das Pfropf-Copolymerisat, beträgt, wobei dieses Pfropf-Copolymerisat hergestellt worden ist durch Polymerisation von Vinylchlorid oder einer Mischung von Vinylchlorid und Vinylacetat in Gegenwart von 0,45 bis 2,5 Gew.-%, bezogen auf eingesetztes Monomeres oder Monomerengemisch, eines Mischpolymerisates, das 20 bis 80 Gew.-%, bezogen auf das Mischpolymerisat, polymerisierte Einheiten des Vinylacetats und 80 bis 20 Gew.-%, bezogen auf das Mischpolymerisat polymerisierte Einheiten des Ethylens enthält und ein Molekulargewicht, osmotisch gemessen, von 5 000 bis 200 000 aufweist.

2. Verwendung nach Anspruch 1, dadurch gekennzeichnet, daß 10 bis 60 Gew.-%, bezogen auf die Gesamtmenge der eingesetzten Polymeren, des in Anspruch 1 beschriebenen Vinylchlorid-Propf-Copolymerisates eingesetzt werden.

3. Verwendung nach Ansprüchen 1 und 2, dadurch gekennzeichnet, daß ein Vinylchlorid-Pfropf-Copolymerisat eingesetzt wird, das enthält : 99,5 bis 92 Gew.-%, bezogen auf das Pfropf-Copolymerisat, polymerisierte Einheiten von Vinylchlorid, 0,1 bis 7,9 Gew.-%, bezogen auf das Pfropf-Copolymerisat, polymerisierte Einheiten des Vinylacetats und 0,1 bis 2,2 Gew.-%, bezogen auf das Pfropf-Copolymerisat, polymerisierte Einheiten des Ethylens, mit der Maßgabe, daß die Summe aus polymerisierten Einheiten des Ethylens und Vinylacetats 0,5 bis 8 Gew.-%, bezogen auf das Pfropf-Copolymerisat, beträgt.

4. Verwendung nach Ansprüchen 1 bis 3, dadurch gekennzeichnet, daß das Vinylchlorid-Pfropf-Copolymerisat hergestellt worden ist in Gegenwart eines Ethylen-Vinylacetat-Mischpolymerisates, das 40 bis 65 Gew.-% polymerisierte Einheiten des Vinylacetats und 60 bis 35 Gew.-% polymerisierte Einheiten des Ethylens enthält.

5. Verwendung nach Ansprüchen 1 bis 4, dadurch gekennzeichnet, daß ein Vinylchlorid-Pfropf-Copolymerisat eingesetzt wird, das einen K-Wert von 55 bis 77 aufweist.

**Claims**

1. Use of a vinyl chloride graft copolymer which has been prepared in the presence of at least one oil-soluble activator which decomposes to grive free radicals, a suspension stabilizer and an emulsifier and, if appropriate, further polymerization auxiliaries, as a component of a mixture together with vinyl chloride homopolymers or copolymers, plasticizers, if appropriate with the addition of heat stabilizers and further additives, said mixture being useful for processing as plastisol or organosol, characterized in that 5 to 70 % by weight, relative to the total quantity of polymers present in the mixture, of a vinyl chloride graft copolymer are employed having a K-value of 50 to 80 and an average particle size of 20 to 60 µm and containing 99.5 to 88 % by weight, relative to the graft copolymer, of polymerized vinyl chloride units, 0.1 to 11.9 % by weight, relative to the grafy copolymer, of polymerized vinyl acetate units and 0.1 to 2.2 % by weight, relative to the graft copolymer, of polymerized ethylene units, with the proviso that the total of the polymerised units of ethylene and vinyl acetate is 0.5 to 12 % by weight, relative to the graft copolymer, this graft copolymer having been prepared by polymerizing vinyl chloride or a mixture of vinyl chloride and vinyl acetate in the presence of 0.45 to 2.5 % by weight, relative to the monomer or mixture of monomers employed, of a copolymer which contains 20 to 80 % by weight, relative to the copolymer, of polymerized vinyl acetate units and 80 to 20 % by weight, relative to the copolymer, of polymerized ethylene units, and which has a molecular weight, determined by osmotic methods, of 5 000 to 200 000.

2. Use according to claim 1, characterized in that 10 to 60 % by weight, relative to the total quantity of polymers present in the mixture, of the vinyl chloride graft copolymer described in claim 1 are employed.

3. Use according to claims 1 and 2, characterized in that a vinyl chloride graft copolymer is employed containing : 99.5 to 92 % by weight, relative to the graft copolymer, of polymerized units of vinyl chloride, 0.1 to 7.9 % by weight, relative to the graft copolymer of polymerized units of vinyl acetate and 0.1 to 2.2 % by weight, relative to the graft copolymer, of polymerized units of ethylene, with the proviso that the total of polymerized units of ethylene und vinyl acetate is 0.5 to 8 % by weight, relative to the graft copolymer.

4. Use according to claims 1 to 3, characterized in that the vinyl chlorides graft copolymers has been prepared in the presence of an ethylene/vinyl acetate copolymer containing 40 to 65 % by weight of polymerized units of vinyl acetate and 60 to 35 % by weight of polymerized units of ethylene.

5. Use according to claims 1 to 4, characterized in that a vinyl chloride graft copolymer is employed having a K-value of 55 to 77.

## Revendications

1. Utilisation d'un copolymère greffé de chlorure de vinyle qui a été préparé en présence d'au moins un activateur se décomposant d'une manière radicalaire, soluble dans l'huile, d'un stabilisant de suspension et d'un émulsionnant ainsi que, le cas échéant, d'autres auxiliaires de polymérisation, en tant que composant de mélange venant en plus d'homopolymères ou de copolymères de chlorure de vinyle, de plastifiants, éventuellement de stabilisants thermiques et d'autres additifs en mélange pour la mise en œuvre de plastisols, caractérisée en ce qu'on utilise, en tant que copolymère greffé de chlorure de vinyle, 5 à 70 % en poids, sur la base de la quantité totale des polymères utilisés dans le mélange, d'un copolymère greffé de chlorure de vinyle qui présente une valeur K de 50 à 80 et une granulométrie moyenne de 20 à 60 μm et qui contient : 99,5 à 88 % en poids, sur la base du copolymère greffé, de motifs polymérisés de chlorure de vinyle, 0,1 à 11,9 % en poids, sur la base du copolymère greffé, de motifs polymérisés d'acétate de vinyle, et 0,1 à 2,2 % en poids, sur la base du copolymère greffé, de motifs polymérisés d'éthylène, dans la mesure où la somme des motifs polymérisés d'éthylène et d'acétate de vinyle est de 0,5 à 12 % en poids, sur la base du copolymère greffé, ce copolymère de vinyle ayant été préparé par polymérisation de chlorure de vinyle ou d'un mélange de chlorure de vinyle et d'acétate de vinyle en présence de 0,45 à 2,5 % en poids, sur la base du monomère ou du mélange de monomères utilisé, d'un copolymère qui contient 20 à 80 % en poids, sur la base du copolymère, de motifs polymérisés d'acétate de vinyle et 80 à 20 % en poids, sur la base du copolymère, de motifs polymérisés d'éthylène et présente une masse moléculaire, mesurée par osmose, de 5 000 à 200 000.

2. Utilisation selon la revendication 1, caractérisée en ce qu'on utilise 10 à 60 % en poids, sur la base de la quantité totale des polymères utilisés, du copolymère greffé de chlorure de vinyle décrit dans la revendication 1.

3. Utilisation selon les revendications 1 et 2, caractérisée en ce qu'on utilise un copolymère greffé de chlorure de vinyle contenant 99,5 à 92 % en poids, sur la base du copolymère greffé, de motifs polymérisés de chlorure de vinyle, 0,1 à 7,9 % en poids, sur la base du copolymère greffé, de motifs polymérisés d'acétate de vinyle, et 0,1 à 2,2 % en poids, sur la base du copolymère greffé, de motifs polymérisés d'éthylène, dans la mesure où la somme des motifs polymérisés d'éthylène et d'acétate de vinyle est de 0,5 à 8 % en poids, sur la base du copolymère greffé.

4. Utilisation selon les revendications 1 à 3, caractérisée en ce que le copolymère greffé de chlorure de vinyle a été préparé en présence d'un copolymère d'éthylène et d'acétate de vinyle qui contient 40 à 65 % de motifs polymérisés d'acétate de vinyle et 60 à 35 % en poids de motifs polymérisés d'éthylène.

5. Utilisation selon les revendications 1 à 4, caractérisée en ce qu'on utilise un copolymère greffé de chlorure de vinyle présentant une valeur K de 55 à 77.